(19) Europäisches Patentamt
European Patent Office
Office européen des brevets

(11) **EP 2 004 890 B1**

(12) **EUROPÄISCHE PATENTSCHRIFT**

(45) Veröffentlichungstag und Bekanntmachung des Hinweises auf die Patenterteilung:
**27.07.2011 Patentblatt 2011/30**

(21) Anmeldenummer: 07724206.3

(22) Anmeldetag: **12.04.2007**

(51) Int Cl.:
***D03D 1/02*** *(2006.01)*

(86) Internationale Anmeldenummer:
**PCT/EP2007/003265**

(87) Internationale Veröffentlichungsnummer:
**WO 2007/118675 (25.10.2007 Gazette 2007/43)**

(54) **AIRBAGGEWEBE**

AIRBAG FABRIC

TISSU POUR COUSSIN GONFLABLE DE SÉCURITÉ

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **12.04.2006 DE 102006017272**
**15.05.2006 DE 102006022560**

(43) Veröffentlichungstag der Anmeldung:
**24.12.2008 Patentblatt 2008/52**

(73) Patentinhaber: **Global Safety Textiles GmbH**
**79689 Maulburg (DE)**

(72) Erfinder:
• **NORBERT, Huber**
**79713 Bad Säckingen (DE)**

• **RUSCHULTE, Jörg**
**79736 Rickenbach (DE)**
• **ESCHBACH, Thomas**
**79790 Rheinheim (DE)**
• **GERSPACH, Thomas**
**79713 Bad Säckingen (DE)**

(74) Vertreter: **Fischer, Matthias et al**
**Wiese Konnerth Fischer**
**Patentanwälte Partnerschaft**
**Schertlinstrasse 18**
**81379 München (DE)**

(56) Entgegenhaltungen:
**EP-A1- 0 509 399     EP-A1- 0 616 061**
**WO-A-96/05985       WO-A-97/37068**
**WO-A-2004/106120**

EP 2 004 890 B1

## Beschreibung

Die vorliegende Erfindung betrifft ein Gewebe für Airbag-Rückhaltesysteme, sowohl für konventionell genähte Airbags als auch in einem Stück gewebte sog. OPW-Bags (one piece woven bags) bzw. OPW-Luftsäcke.

Aus der EP 1 463 655 A1 (Milliken) ist ein Airbagkissen bekannt, welches aus einem Polyestergewebe mit geringer Garnfestigkeit (60 bis 40 cN/tex) hergestellt wird. Das Airbagkissen wird beschichtet und mit einer Umfangsnaht konfektioniert, welche entweder als Doppelstichumfaltnaht oder als Dreifachstichumfaltnaht ausgebildet ist. Das Ziel hierbei ist, die Abströmung der Gase aufgrund einer Nahtleckage durch eine neue Nahtkonstruktion zu lösen, wobei für die Bagwandung ein beschichtetes PES-Gewebe mit geringerer Garnfestigkeit eingesetzt wird.

Aus der DE 100 49 395 A (BST) ist ein textiles Flächengebilde zur Verwendung in Personenrückhaltesystemen bekannt, welches plastisch verformbare Fäden enthält, die bei einer Belastung in wenigstens einer Flächenrichtung eine Vergrößerung der Gewebeoberfläche zulassen, und welches mit einer, insbesondere elastischen Beschichtung, die eine konstante Luftdurchlässigkeit aufweist, versehen ist.

Die textile Fläche, ist, wenn sie in den Wandungen eines Airbags verbaut wird, hinsichtlich der Belastungen durch Hitze und Druck bei Crash, ausreichend dimensioniert. Die Schwachstelle ist jedoch die Nähnaht, welche sich bei einem Crash aufdehnt und dabei das Grundgewebe unter der Beschichtung freilegt, wodurch sich eine unkontrollierte Abströmung von Heißgas in Verbindung mit Durchbrennen des Gewebes ergeben kann.

Derzeit werden, insbesondere für den Einsatz in Frontairbagsystemen, unter anderem Airbaggewebe eingesetzt, die beschichtet werden müssen. Diese Beschichtung hat den Sinn, das Airbaggewebe gegen Gasleckage abzudichten; d. h. die Beschichtung reduziert die Porengröße und somit den Gasdurchlass.

Im Anwendungsfall eines Airbagsystems werden zum Einbringen des Aufblasgases unter anderem Generatoren verwendet, die sehr heißes Gas in den Airbag einbringen, um ihn zu entfalten und aufzublasen. Gerade aufgrund der hohen Temperaturen kann unter anderem eine Beschichtung aufgebracht werden. Durch diese Beschichtung wird die Wärmekapazität des Airbagmaterials erhöht. Dieses ist durch die Aufnahme eines Teiles der Wärmeenergie vor einem Durchbrennen geschützt. Der Einsatz von Beschichtungen, und insbesondere der üblichen Silikonbeschichtungen hat zur Folge, dass sich die Reibung des Gewebes im beschichteten Bereich erhöht, wodurch der Entfaltungsprozess negativ beeinflusst werden kann.

Zudem ist beschichtetes Gewebe nur sehr schwer recycelbar, wodurch die Kosten für eine Entsorgung immens in die Höhe getrieben werden.

Das Aufbringen einer Beschichtung ist sehr aufwendig und nicht unkritisch. Hier ist unter anderem ein streifiges Warenbild anzuführen, das durch Fehler in der Beschichtungspaste, dem Trägergewebe, beim Beschichtungsprozess, etc. verursacht werden kann. Die Streifen im Warenbild entstehen durch eine unterschiedliche Höhe der Beschichtungsauflage. Um diesem entgegenzuwirken muss die Auflage der Beschichtung insgesamt erhöht werden, um auch in den streifigen Bereichen, in denen prozessbedingt die Beschichtungsauflage niedriger als in den anderen Bereichen ist, das erforderliche Mindestmaß an Auflage zu haben. Insgesamt ist der Beschichtungsprozess sehr kostenaufwendig, was zu einer beträchtlichen Erhöhung der Kosten des Airbagmaterials führt.

Die Naht und die Wandung eines Airbags sind Konstruktionselemente, welche in der Regel aus demselben Gewebe hergestellt werden. Um die unterschiedlichen Anforderungen bei gleicher Spezifikation auszugleichen, werden aufwendige Nahtkonstruktionen erforderlich, um die "Schwachstelle Naht" der Performance der Bagwandungen anzupassen.

Ein weiterer Nachteil besteht darin, dass eine Gasabströmung durch die Umfangsnaht von Front- und Fahrerairbags Verbrennungen im Unterarmbereich des Fahrers verursachen kann.

Die angestrebte Filterwirkung des Wandungsgewebes eines Airbags ist bei unkontrollierter Gasabströmung durch die Naht stark reduziert, d. h. die Wandungsfläche wird weniger hoch beansprucht, als physikalisch möglich wäre. Gegenüber der unsicheren Funktion der Naht ist die Leistungsfähigkeit der Wandungsbereiche unökonomisch überdimensioniert. Der Luftsack ist auch hinsichtlich seiner dynamischen Beanspruchung bei Einsatz des bekannten Gewebes aus hochfesten Garnen konstruktiv nicht optimiert.

WO 96/05985 offenbart ein unbeschichtetes Airbaggewebe mit Kettfäden und Schussfäden aus Multifilamenten.

Die Erfindung stellt sich die Aufgabe, ein Gewebe der eingangs erwähnten Art vorzuschlagen, bei dem die aus dem Stand bekannten Nachteile vermieden bzw. stark verringert werden.

## Erste Lösung

Die Aufgabe wird gelöst mit einem Gewebe gemäß Anspruch 1. Das erfindungsgemäße Gewebe für einen Airbag, mit Kettfäden und Schussfäden, insbesondere aus Multifilamenten, ist gekennzeichnet durch eine Gewebedichte [DG %] größer als 95% nach Prof. Walz (Die Gewebedichte nach Prof. Walz ist definiert in "Die Gewebedichte I" und "Die Gewebedichte II" in der Veröffentlichung "Textilpraxis" von 1947, Seiten 330 bis 366, Robert Kohlhammer-Verlag, Stuttgart, Deutschland). Die Errechnung der Gewebedichte DG setzt die Bestimmung der Garnfeinheiten, der Einstellungen und die Kenntnis der Dichte des eingesetzten Faserstoffs voraus.

Berechnung der Gewebedichte DG % nach Prof. Walz: Gewebedichte

$$DG \% = (d_k + d_s)^2 \cdot f_k \cdot f_s$$

Hierzu bedeuten:

$d_k/d_s$ = Substanzdurchmesser des Kett- bzw. Schussgarnes in mm
$f_k/f_s$ = Kettfäden bzw. Schussfäden pro cm

Die Substanzdurchmesser der Garne werden wie folgt berechnet:

$$d_{ks} = \frac{\sqrt{dtex_{ks}}}{88,5 \cdot \sqrt{Dichte\ g/cm^3}}$$

{Die obige Formel gilt nur für Leinwandbindungen. Liegen andere Bindungen vor, so sind die errechneten Gewebedichten mit bestimmten Faktoren zu multiplizieren (z. B. Köper 2:1 = 0,70, Köper 2:2 = 0,56, Köper 3:1 = 0,56, Köper 4:4 = 0,38, Satin 1:4 = 0,49, Panama 2:2 = 0,56)}.

Stellt man sich die Kett- und Schussfäden eines Gewebes als runde, glatte, zylindrische Körper vor, so ist eine Dichte (Einstellung, Fadenzahl pro cm) denkbar, bei der sich die Fäden gegenseitig gerade berühren, ohne dass ein nennenswerter Abstand besteht und ohne dass sie sich gegenseitig verformen. Dieser Zustand wird als Gewebedichte von 100 % bezeichnet.

In der folgenden Beschreibung werden u.a. einige Fachbegriffe verwendet, zu denen hier kurz die sachlichen Zusammenhänge bzw. Fundstellen genannt werden sollen.

Grundsätzlich ist mit dem Begriff "Bag", Airbag", "Seiten-Airbag" oder "Luftsack" stets das Gleiche gemeint.

"Bagwandung" bezeichnet die Wand oder die Wände eines Airbags.

"Gewebedehnung" bezeichnet einen dem Fachmann auf dem Gebiet der Weberei gleichsam als Binsenweisheit bekannten Parameter als Funktion der Materialdehnung und der Konstruktionsdehnung.

Der Begriff "Einstellung" beschreibt den Materialeinsatz (Materialtyp und Garnfeinheit) und Fadendichten Kette/ Schuss in der Konstruktion.

Garnfeinheit: DIN ISO 2060

Fadendichte: DIN EN 1049

Einarbeitung Kette/Schuss: DIN 53852

Kammausziehkraft: Norm ASTM-D 6479 (American Society for Testing and Materials)

Der Einsatz des erfindungsgemäßen hochdichten Gewebes ermöglicht vorteilhafterweise die Herstellung zuverlässiger Airbags ohne Beschichtung. Dies führt zu enormen Kostenvorteilen in der Herstellung von Airbags, sowohl bei tatsächlich genähten Airbags als auch bei OPW-Luftsäcken.

In einer vorteilhaften Ausbildung der Erfindung hat das Gewebe eine Luftdurchlässigkeit oder Permeabilität (LD) nach ISO 9237 von kleiner als 3 l/dm2/min, vorzugsweise kleiner als 1 1/dm2/min (bei 500 Pa Differenzdruck). Hierdurch lässt sich vorteilhafterweise, insbesondere in Verbindung mit hochfesten Garnen eine Verbesserung der kontrollierten Gasabströmung erreichen.

In einer weiteren besonders vorteilhaften Ausbildung der Erfindung hat das Gewebe ein Einarbeitungsverhältnis von Kettfaden zu Schussfaden von größer als 1. Die hierdurch in Kettrichtung höhere Ondulation im Gewebe ermöglicht vorteilhafterweise eine stärkere Konstruktionsdehnungsfähigkeit in Kettrichtung.

Erfindungsgemäß hat das Gewebe eine Kammausziehkraft größer 700N in Kettrichtung oder Schussrichtung. Die Kammausziehkraft ist ein Indikator für die Nahtfestigkeit und damit auch ein Maß für die Nahtöffnung. Die Kammausziehkraft wird gemäß ASTM-D 6479 ermittelt. Ihre Größe wird durch die Haftreibung zwischen den beiden Fadensystemen Kette und Schuss an ihren Kreuzungspunkten bestimmt. Je höher die Haftreibung zwischen Kette und Schuss ist, desto größer ist der Widerstand gegen Verschiebung der Gewebestruktur und desto größer ist die Kammausziehkraft. Die erfindungsgemäß hohe Kammausziehkraft hat damit vorteilhafterweise eine hohe Nahtfestigkeit zu Folge.

Durch höhere Einarbeitung der Kette kann eine hohe Gewebedichte in Verbindung mit der niedrigen Luftdurchlässigkeit LD eingestellt werden. Die Einarbeitung gibt die Verkürzung des Garnmaterials in der Gewebestruktur durch Ondulation des Fadens in Kett- und/oder Schussrichtung an. Die Einarbeitungsdifferenz wird erreicht durch präzise Einstellung der Kettspannung auf einem niedrigen Niveau. Wie bekannt steigt die Einarbeitung bei Reduzierung der Kettspannung. Desweiteren kann über die Einstellung der Einarbeitung der Unterschied in der Gewebedehnung Kette/ Schuss ausgeglichen werden, sodass sich die Differenz zwischen den Materialdehnungen Kette/Schuss, welche sich aus der Subtraktion der jeweiligen Einarbeitung von der jeweiligen Gewebedehnung ergibt, auf einem sehr niedrigen Niveau befindet. Die Verbindung dieser Parameter führt im Luftsack, ob konventionell genäht oder mit Webnaht hergestellt, zu einer geringeren Nahtöffnung, einmal aufgrund der hohen Kammausziehkraft (Verringerung der Öffnung der Gewebestruktur durch Lagenverschiebung der Kett-/Schussfäden) und dann durch das hohe E-Modul (Verringerung der Öffnung der Gewebestruktur durch geringere Längung des belasteten Fadensystems). Aufgrund der geringen Nahtöffnung ist die Leckage trotz fehlender Nahtversiegelung (z.B. Beschichtung), welche bei der Herstellung von Luftsäcken eingesetzt werden kann, sehr niedrig.

In weiteren vorteilhaften Ausbildungen der Erfindung hat das Gewebe eine Kammausziehkraft größer 750N bis größer als 900N in Kettrichtung oder Schussrichtung, mit den eben beschriebenen Vorteilen.

## Zweite Lösung

Die Aufgabe wird auch gelöst mit einem Gewebe für einen Airbag, mit Kettfäden und Schussfäden, insbesondere aus Multifilamenten, das gekennzeichnet ist durch eine von der Anmelderin hier neu definierte "PF-Kennzahl" größer als 2700, gemäß Anspruch 10.

Berechnung der PF-Kennzahl:

$$\text{PF-Kennzahl} = \frac{\text{Porenzahl Gewebe x Spez. Flächengewicht}^2}{1.000.000}$$

| | | |
|---|---|---|
| wobei Porenzahl Gewebe | = | (Kettfadendichte - 1) x (Schussfadendichte - 1) |
| wobei Kett-/Schussfadendichte | = | Anzahl Fäden pro Strecke [n/dm] |
| wobei Spez. Flächengewicht | = | Gewicht/Flächeneinheit [g/m$^2$] |

Die sich aus dem erfindungsgemäßen Gewebe gemäß Anspruch 10 und folgenden Ansprüchen ergebenden Vorteile sind analog gleich den Vorteilen, wie sie sich bei einem Gewebe nach einem der Ansprüche 1 bis 9 ergeben. Der Einsatz des hochdichten erfindungsgemäßen Gewebes ermöglicht vorteilhafterweise die Herstellung zuverlässiger Airbags ohne Beschichtung. Dies führt zu enormen Kostenvorteilen in der Herstellung von Airbags, sowohl bei tatsächlich genähten Airbags als auch bei OPW-Luftsäcken. Je höher die PF-Kennzahl, desto höher ist die Zuverlässigkeit eines unbeschichteten Luftsacks.

Das erfindungsgemäße hochdichte Gewebe ist geeignet, Partikel des im Einsatzfall zur Auslösung und Entfaltung des Luftsackes eingesetzten Sprengsatzes zurückzuhalten. Dadurch werden gefährliche Durchbrenneffekte und Verletzungen von Fahrzeuginsassen verhindert. Darüberhinaus ist bei Verwendung des erfindungsgemäßen Gewebes die Beschichtung als zusätzlicher Herstellungsprozess nicht erforderlich. Es wird ein im Stand der Technik übliches zusätzliches Fehlerpotential vermieden. Dieses musste kostenaufwendig durch zusätzliche Kontrollen und Prüfungen überwacht werden. Der hierdurch verursachte beträchtliche Kostennachteil entfällt bei Einsatz des erfindungsgemäßen hochdichten Gewebes.

Ein weiterer Vorteil des erfindungsgemäßen Gewebes ergibt sich aus seiner gegenüber herkömmlichen Luftsackgeweben höheren Wärmekapazität. Die Funktion der herkömmlichen Beschichtung (Bereitstellung zusätzlicher Wärmekapazität) wird durch die hohe Gewebedichte mehr als kompensiert.

In weiteren vorteilhaften Ausbildungen der Erfindung hat das Gewebe eine LD nach ISO 9237 kleiner als 3 1/dm$^2$/min und insbesondere ein Einarbeitungsverhältnis Kettfaden /Schussfaden größer als 1, mit den eben beschriebenen Vorteilen.

In weiteren vorteilhaften Ausbildungen der Erfindung hat das Gewebe eine PF-Kennzahl größer als 2800, vorzugsweise größer als 2900. Hierdurch verstärken sich die oben diskutierten Vorteile weiter.

In einer weiteren vorteilhaften Ausbildung der Erfindung ist das Gewebe gekennzeichnet dadurch, dass die

Einarbeitung der Kettfäden größer ist als die Einarbeitung der Schussfäden, mit den oben analog hierzu beschriebenen Vorteilen.

**[0042]** In einer weiteren vorteilhaften Ausbildung der Erfindung ist das Gewebe ein hochdichtes Gewebe mit einem Cover, factor von 100% im Rohgewebe, mit niedriger Garnfestigkeit.

**[0043]** In einer weiteren vorteilhaften Ausbildung der Erfindung hat das Gewebe eine Gewebedichte (DG) größer/gleich 110% mit hoher Nahtfestigkeit (Kammausziehkraft größer 200N) bei einem Garn in LDPF-Ausführung (feinfilamentig, Titer kleiner 5 dtex/Filament).

**[0044]** Die Erfindung ermöglicht vorteilhafterweise die Bildung von vielen Varianten von Geweben mit variablen Parametern, wie Garntiter, Garnfestigkeit 50 bis 85 cN/tex, Garndehnung, E-Modul und Arbeitsvermögen je nach Anforderung, sowie Gewebe mit einer Gewebedehnung bei maximalem Luftsackinnendruck im - bezogen auf die Materialdehnüng - elastischen (Hookeschen) Bereich, damit bei Druckreduzierung die ursprüngliche Gewebedichte wieder hergestellt werden kann.

**[0045]** Die Erfindung ermöglicht die Herstellung von unbeschichtetem Airbaggewebe mit maximal möglicher Gewebedichte aus feinfilamentigen Garnen, wobei das Gewebe symmetrisch konstruiert ist und Garne mit unterschiedlichen Titern, unterschiedlichen Festigkeits- und Dehnungswerten aufweist. Dabei ist zu beachten, dass bei abnehmender Festigkeit das E-Modul ebenfalls abnimmt und das Arbeitsvermögen zunimmt. Die Gewebedichte wird im Rohzustand mit maximal 100% und nach Ausrüstung (Fertiggewebe) mit maximal 110% erreicht, wobei allgemein das Ziel verfolgt wird, die Nahtleckage durch eine hohe Gewebedichte sowie hohe Kammausziehkraft zu minimieren. Hierzu wird die Bagwandung aus unbeschichtetem Gewebe aus Garnen unterschiedlicher Spezifikation je nach Bagkonstruktion hergestellt.

**[0046]** Es ergeben sich noch zahlreiche weitere Vorteile der erfindungsgemäßen Lösung: Durch eine höhere Nahtfestigkeit, gemessen als Kammausziehkraft in N, erfolgt eine kontrollierte Gasabströmung durch die Bagwandung und/oder durch ein adaptives Vent (Abblasöffnung) und erhöht somit die Schutzwirkung. Durch den Einsatz des erfindungsgemäßen Gewebes besteht für den Konstrukteur die Möglichkeit, den Airbag zu optimieren. Das Gewebe in einer hohen Dichte, bis zum Grenzbereich des Cover-Faktors, hat eine höhere Konstruktionsdehnung (Ondulation). Durch den Einsatz von Garnen mit geringer Festigkeit, was in der Fläche durch höhere Fadenzahl teilweise kompensiert wird, erhöht sich die Materialdehnung des Gewebes. Es kann bei dynamischer Belastung durch erhöhtes Arbeitsvermögen elastischer reagieren. Es ist eine Reduzierung der Produktionskosten für Garn durch geringere Verstreckung sowie eine Reduzierung der Qualitätskosten durch bessere Garnqualität als Folge geringerer Verstreckung realisierbar.

<u>Beispielhafte Parameter von technischem PA 6.6 - Garn (dtex 470)</u>

**[0047]**

| Parameter-Bez. | Einheit | Standard Type A | Standard Type B | Modifizierte Type - A | Modifizierte Type - B |
|---|---|---|---|---|---|
| Festigkeit<br>Dehnung | cN/tex<br>% | 76,3<br>23 | 80<br>19 | 60<br>45 | 50<br>70 |
| Arbeitsvermögen<br>E-Modul | cN/tex<br>cN/tex | 360<br>388 | 348<br>468 | 400<br>333 | 420<br>310 |
| Anzahl Filamente | N | 144 | 140 | 144 | 144 |

**[0048]** Um eine geringe Permeabilität (LD) zu erreichen ist ein Garn mit möglichst hoher Filamentzahl, ein sog. Low Denier Per Filament-Type (LDPF-Type), d. h. Titer < 5 dtex/Filament erforderlich.

**[0049]** Das Arbeitsvermögen errechnet sich wie folgt:

Arbeitsvermögen [cN/tex] = Festigkeit [cN/tex] x $\sqrt{}$ Dehnung [%]

**[0050] Ausführungsbeispiel eines erfindungsgemäßen Gewebes**

**[0051]** Die Parameter des Gewebes zeigen - in Vorausberechnung - folgendes Bild:

| Parameter-bezeichnung | Ein-heit | dtex 470 | | | | dex 700 | | | |
|---|---|---|---|---|---|---|---|---|---|
| | | Garn-Type Standard Hochfest | Garn-Type Standard Super-hochfest | Garn-Type A | Garn-Type B | Garn-Type Standard Hochfest | Garn-Type Standard Super-hochfest | Garn-Type A | Garn-Type B |
| Konstruktion | | | | | | | | | |
| - Kette | Fd/cm | 20 | 20 | 23 | 23 | 16 | 16 | 18 | 18 |
| - Schuss | Fd/cm | 19 | 19 | 23 | 23 | 16 | 16 | 18 | 18 |
| Materialeinsatz | g/m$^2$ | 210 | 210 | 253 | 253 | 250 | 250 | 289 | 289 |
| Festigkeit | | | | | | | | | |
| - Kette | N/5cm | 3430 | 3760 | 3240 | 2700 | 4080 | 4480 | 3780 | 3150 |
| - Schuss | N/5cm | 3250 | 3570 | 3240 | 2700 | 4080 | 4480 | 3780 | 3150 |
| Web-Nutzeffekt | % | 95 | 95 | 97 | 98 | 95 | 95 | 97 | 98 |
| Weberei-Ausbringung | % | 100 | 100 | 84 | 85 | 100 | 100 | 91 | 92 |

Die Gewebebindung ist einheitlich eine Leinwandbindung L1/1. Wie bereits oben beschrieben wird das hochdichte unbeschichtete Gewebe die Nahtdichtigkeit verbessern, um die Gasabströmung durch die Bagwandungsflächen zu optimieren. Auf diese Weise soll die Luftdurchlässigkeit (LD) bei hohem Innendruck größer werden und kontrolliert Gasabströmung zulassen, um danach bei Druckabfall die LD - gleichsam belastungsäquivalent - wieder gegen Null abfallen zu lassen. Ein derartiger Verlauf der Rückhaltewirkung ist nur steuerbar über die Wandungsflächen bei möglichst dichter Naht.

Aus der Notwendigkeit, den textilen Bag an das jeweilige Fahrzeug, an den zum Einsatz kommenden Generator sowie an die Nahtkonstruktion anzupassen, wird das hochdichte Gewebe mit Garntypen unterschiedlicher Festigkeit, Dehnung und Arbeitsvermögen ausgeführt. Auf diese Weise besteht mehr Spielraum für die Optimierung des Aufblasverhaltens des Airbags bei dessen textiltechnischer Konstruktion.

Bei gleicher statischer LD von < 11/dm$^2$/min (bei 500 Pa Differenzdruck) kann mit dem Gewebeparametern Festigkeit, Dehnung, Arbeitsvermögen und E-Modul und zusätzlich mit der Nahtkonstruktion variiert bzw. optimiert werden.

Damit kann vor allem die sich aus Konstruktions- und Materialdehnung zusammensetzende Gewebedehnung im - bezogen auf die Materialdehnung - elastischen Bereich (Hookescher Bereich) im Sinne der Belastungsäquivalenz genutzt werden.

Die maximale Gewebedichte in %, berechnet nach Prof. Walz (siehe oben), ergibt sich im Fertiggewebe mit 110% und Rohgewebe mit ca. 100%.

**Übersicht beispielhafter erfindungsgemäßer Gewebekonstruktionen** (Material/Fadendichten) und Gewebedichte (DG nach Prof. Walz)

| Bezeichnung | Ein-heit | Rohware | | | | Fertigware | | | |
|---|---|---|---|---|---|---|---|---|---|
| | | Standard-konstrukt 470 dtex 20/19/cm | Standard-konstrukt 700 dtex 16/16/cm | Erfindung 470 dtex 23/23/cm | Erfindung 700 dtex 18/18/cm | Standard-konstrukt 470 dtex 20/19/cm | Standard-konstrukt 700 dtex 16/16/cm | Erfindung 470 dtex 23/23/cm | Erfindung 700 dtex 18/18/cm |
| Konstruktion Kette | (x/cm) | 18,9 | 15,2 | 21,9 | 17,9 | 20 | 16 | 23 | 18,7 |
| Schuss | (x/cm) | 18,7 | 15,7 | 21,9 | 17,9 | 19 | 16 | 23 | 18,7 |
| Gewebe-dic-hte (DG) | (%) | 74 | 75 | 100 | 100 | 80 | 80 | 110 | 110 |

Die Gewebeparameter Dehnung [%], Weiterreißkraft [N], Kammausziehkraft [N], Höchstzugkraft [N/5cm] und LD [1/dm$^2$/min] werden durch Garneinsatz, sowie die entsprechenden Fertigungsparameter beim Web- und Ausrüstprozess eingestellt.

Gemäß der Erfindung kann der Einsatz eines (beispielsweise oben genannten) PA 6.6-Garnes mit einer geringen Festigkeit in cN/tex vorgesehen werden, was gleichzeitig verbunden ist mit einer höheren Materialdehnung, einem höheren Arbeitsvermögen und einer geringeren Höchstzugkraft.

Ebenso ist erfindungsgemäß auch die Gewebekonstruktion mit einer maximal möglichen Fadendichte (größtmöglicher Cover-Faktor) vorgesehen.

Das Gewebe hat im unbeschichteten Zustand eine niedrige Luftdurchlässigkeit mit 1 1/dm$^2$/min. Bei entsprechendem Bag-Innendruck dehnt sich das Gewebe aufgrund seines erhöhten Arbeitsvermögens, die LD wird größer und gleichzeitig wird das Bag-Volumen größer, was den Bag-Innendruck reduziert. Ein beschichtetes Gewebe verhält sich hinsichtlich Arbeitsvermögen und Bag-Volumen gleich.

Je nach Elastizität der Beschichtung verhält sich die Zunahme der LD, bzw. der vom Innendruck abhängige Verlauf der LD-Kurve unterschiedlich. Entsprechend ist das Verhältnis als laminiertes Gewebe mit einer dehnbaren Folie, wobei das Dehnverhalten der Bag-Wandungen durch Voluemenvergrößerung die Verminderung des Bag-Innendrucks bewirkt.

Mit Einsatz des erfindungsgemäßen Gewebes wird das Verhältnis von

Festigkeit und Arbeitsvermögen der Bagwandung / Belastung der Naht zu Gunsten der Nahtdichtigkeit verbessert. Eine bei aus dem Stand der Technik bekannten Geweben gegebene unkontrollierte Abströmung des Aufblasgases im Nahtbereich des Airbags liegt bei dem erfindungsgemäßen Gewebe nicht vor. Durch den erfindungsgemäßen Wegfall dieser Einschränkung erhöht sich die Rückhaltewirkung des Airbags.

Die Fertigungskosten in der Weberei erhöhen sich trotz besserer Nutzeffekte durch die geringere Ausbringung. Die Reduzierung der Qualitätskosten dürfte dieses überkompensieren. Die verbesserte Garnqualität lässt darüber hinaus höhere Produktionsgeschwindigkeit zu. Der Vergleich zum Standardgewebe erbringt den Nachweis für die Optimierungsvoraussetzungen. Das erfindungsgemäße hochdichte Gewebe wird in Airbags unbeschichtet eingesetzt. Die Beschichtungskosten werden eingespart und gleichzeitig wird die Recyclingfähigkeit verbessert.

Im Anschluss werden zwei Beispiele eines erfindungsgemäßen Gewebes (Beispiele 1 und 2) neben zwei Beispielen herkömmlicher Gewebe (Beispiele 5 und 6) gestellt.

| Beispiel-Nummer | | 1 | 2 | 5 | 6 |
|---|---|---|---|---|---|
| **Konstruktion** | | Erfindung | Erfindung | Standard | Standard |
| Garnfeinheit Kette | (dtex) | 235 | 470 | 235 | 470 |
| Materialdichte Kette | (g/cm$^3$) | 1,15 | 1,15 | 1,15 | 1,15 |
| Fadendichte Kette | (x/dm) | 316 | 220 | 285 | 200 |
| Garnfeinheit Schuss | (dtex) | 235 | 470 | 235 | 470 |
| Materialdichte Schuss | (g/cm$^3$) | 1,15 | 1,15 | 1,15 | 1,15 |
| Fadendichte Schuss | (x/dm) | 316 | 220 | 285 | 190 |
| Substanzdurchmesser Kette | | 0,16152574 | 0,228431893 | 0,16152574 | 0,22843189 |
| Substanzdurchmesser Schuss | | 0,16152574 | 0,228431893 | 0,16152574 | 0,22843189 |
| **Gewebedichte (Prof. Walz) (%)** | | **104.2119775** | **101,0226669** | **84,768245** | **79,315317** |
| Flächengewicht | (g/m$^2$) | 171,5 | 243,9 | 155 | 210 |
| Anzahl Poren | (x/dm$^2$) | 99225 | 47961 | 80656 | 37611 |
| Flächengewicht$^2$ | | 29412,25 | 59487,21 | 24025 | 44100 |
| **PF Kennzahl (Poren-Flächenpewicht)** | **(x)** | **2918,430506** | **2853,066079** | **1937,7604** | **1658,6451** |
| Einarbeitung Kette | (%) | 10,2 | 9,5 | 6,46 | 6,6 |
| Einarbeitung Schuss | (%) | 4,4 | 6,3 | 4,73 | 3,9 |
| Δ Einarbeitung Kette-Schuss | (%) | 5,8 | 3,2 | 1,73 | 2,7 |
| Gewebedehnung Kette | (%) | 38,8 | 40,6 | 34,2 | 36,09 |

(fortgesetzt)

| Beispiel-Nummer | | 1 | 2 | 5 | 6 |
|---|---|---|---|---|---|
| Konstruktion | | Erfindung | Erfindung | Standard | Standard |
| Gewebedehnung Schuss | (%) | 32,1 | 36,3 | 32,92 | 34,34 |
| Materialdehnung Kette | (%) | 28,6 | 31,1 | 27,74 | 29,49. |
| Materialdehnung Schuss | (%) | 27,7 | 30 | 28,19 | 30,44 |
| Δ Materialdehnung Kette-Schuss | (%) | 0,9 | 1,1 | -0,45 | -0,95 |
| Kammausziehkraft Kette | (N) | 715 | 895 | 632 | 511 |
| Kammausziehkraft Schuss | (N) | 819 | 907 | 628 | 422 |

**Patentansprüche**

1. Gewebe für einen Airbag, mit Kettfäden und Schussfäden, insbesondere aus Multifilamenten, **gekennzeichnet durch** eine Gewebedichte größer als 95% nach Prof. Walz und eine Kammausziehkraft größer 700N in Kettrichtung oder Schussrichtung.

2. Gewebe nach Anspruch 1, **gekennzeichnet durch** eine Permeabilität (LD) nach ISO 9237 kleiner als 3 l/dm$^2$/min (bei 500 Pa Differenzdruck).

3. Gewebe nach Anspruch 1 oder 2, **gekennzeichnet durch** ein Einarbeitungsverhältnis Kettfaden/Schussfaden größer als 1.

4. Gewebe nach einem der Ansprüche 1 bis 3, **dadurch gekennzeichnet, dass** das Gewebe unbeschichtet ist.

5. Gewebe nach einem der Ansprüche 1 bis 4, **gekennzeichnet durch** eine Gewebedichte größer als 100% nach Prof. Walz.

6. Gewebe nach einem der Ansprüche 1 bis 5, **gekennzeichnet durch** eine Kammausziehkraft größer 750N in Kettrichtung oder Schussrichtung.

7. Gewebe nach einem der Ansprüche 1 bis 6, **gekennzeichnet durch** eine Kammausziehkraft größer 800N in Kettrichtung oder Schussrichtung.

8. Gewebe nach einem der Ansprüche 1 bis 7, **gekennzeichnet durch** eine Kammausziehkraft größer 850N in Kettrichtung oder Schussrichtung.

9. Gewebe nach einem der Ansprüche 1 bis 8, **gekennzeichnet durch** eine Kammausziehkraft größer 900N in Kettrichtung oder Schussrichtung.

10. Gewebe für einen Airbag, mit Kettfäden und Schussfäden, insbesondere aus Multifilamenten, **gekennzeichnet durch** eine PF-Kennzahl größer als 2700 und eine Kammausziehkraft größer 700N in Kettrichtung oder Schussrichtung.

11. Gewebe nach Anspruch 10, **gekennzeichnet durch** eine Permeabilität (LD) nach ISO 9237 kleiner als 3 l/dm$^2$/min.

12. Gewebe nach Anspruch 10 oder 11, **gekennzeichnet durch** ein Einarbeitungsverhältnis von Kettfaden zu Schussfaden von größer als 1.

13. Gewebe nach einem der Ansprüche 10 bis 12, **dadurch gekennzeichnet, dass** das Gewebe unbeschichtet ist.

14. Gewebe nach einem der Ansprüche 10 bis 13, **gekennzeichnet durch** eine PF-Kennzahl größer als 2800.

**15.** Gewebe nach einem der Ansprüche 10 bis 14, **gekennzeichnet durch** eine PF-Kennzahl größer als 2900.

**16.** Gewebe nach einem der Ansprüche 10 bis 15, **gekennzeichnet durch** eine Kammausziehkraft größer 750N in Kettrichtung oder Schussrichtung.

**17.** Gewebe nach einem der Ansprüche 10 bis 16, **gekennzeichnet durch** eine Kammausziehkraft größer 800N in Kettrichtung oder Schussrichtung.

**18.** Gewebe nach einem der Ansprüche 10 bis 17, **gekennzeichnet durch** eine Kammausziehkraft größer 850N in Kettrichtung oder Schussrichtung.

**19.** Gewebe nach einem der Ansprüche 10 bis 18, **gekennzeichnet durch** eine Kammausziehkraft größer 900N in Kettrichtung oder Schussrichtung.

**20.** Gewebe nach einem der vorhergehenden Ansprüche, **dadurch gekennzeichnet, dass** die Einarbeitung der Kettfäden größer ist als die Einarbeitung der Schussfäden.


**Claims**

**1.** A fabric for an airbag, comprising warp threads and weft threads, in particular using multifilaments, **characterized by** a cover factor greater than 95% WALZ density and an edge comb resistance greater than 700N in the warp or weft direction.

**2.** The fabric as set forth in claim 1, **characterized by** a permeability as per ISO 9237 smaller than 3 l/dm$^2$/min (for a differential pressure of 500 Pa).

**3.** The fabric as set forth in claim 1 or 2, **characterized by** a warp/weft crimp ratio greater than 1.

**4.** The fabric as set forth in any of the claims 1 to 3, **characterized in that** the fabric is uncoated.

**5.** The fabric as set forth in any of the claims 1 to 4, **characterized by** a cover factor greater than 100% WALZ density.

**6.** The fabric as set forth in any of the claims 1 to 5, **characterized by** an edge comb resistance greater than 750N in the warp or weft direction

**7.** The fabric as set forth in any of the claims 1 to 6, **characterized by** an edge comb resistance greater than 800N in the warp or weft direction

**8.** The fabric as set forth in any of the claims 1 to 7, **characterized by** an edge comb resistance greater than 850N in the warp or weft direction

**9.** The fabric as set forth in any of the claims 1 to 8, **characterized by** an edge comb resistance greater than 900N in the warp or weft direction.

**10.** A fabric for an airbag, comprising warp threads and weft threads, in particular using multifilaments, **characterized by** a PF-figure (pore/basis weight factor) greater than 2700 and a an edge comb resistance greater than 700N in the warp or weft direction.

**11.** The fabric as set forth in claim 10, **characterized by** a permeability as per ISO 9237 smaller than 3 l/dm$^2$/min.

**12.** The fabric as set forth in claim 10 or 11, **characterized by** a warp/weft crimp ratio greater than 1.

**13.** The fabric as set forth in any of the claims 10 to 12, **characterized in that** the fabric is uncoated.

**14.** The fabric as set forth in any of the claims 10 to 13, **characterized by** a PF-figure (pore/basis weight factor) greater than 2800.

15. The fabric as set forth in any of the claims 10 to 14, **characterized by** a PF-figure (pore/basis weight factor) greater than 2900.

16. The fabric as set forth in any of the claims 10 to 15, **characterized by** an edge comb resistance greater than 750N in the warp or weft direction.

17. The fabric as set forth in any of the claims 10 to 16, **characterized by** an edge comb resistance greater than 800N in the warp or weft direction.

18. The fabric as set forth in any of the claims 10 to 17, **characterized by** an edge comb resistance greater than 850N in the warp or weft direction.

19. The fabric as set forth in any of the claims 11 to 18, **characterized by** an edge comb resistance greater than 900N in the warp or weft direction.

20. The fabric as set forth in any of the preceding claims, **characterized in that** the crimp of the warp threads is greater than the crimp of the weft threads.


**Revendications**

1. Tissu pour un coussin gonflable de sécurité, comportant des fils de chaîne et des fils de trame, notamment en multifilaments, **caractérisé par** une densité de tissu supérieure à 95 % d'après le Professeur Walz et une force d'extraction du peigne supérieure à 700 N en direction de chaîne ou en direction de trame.

2. Tissu selon la revendication 1, **caractérisé par** une perméabilité (LD) d'après ISO 9237 inférieure à 3 l/dm$^2$/min (pour 500 Pa de pression différentielle).

3. Tissu selon les revendications 1 ou 2, **caractérisé par** un rapport d'embuvage fil de chaîne/fil de trame supérieur à 1.

4. Tissu selon l'une des revendications 1 à 3, **caractérisé par le fait que** le tissu est non-enrobé.

5. Tissu selon l'une des revendications 1 à 4, **caractérisé par** une densité de tissu supérieure à 100 % d'après le Professeur Walz.

6. Tissu selon l'une des revendications 1 à 5, **caractérisé par** une force d'extraction du peigne supérieure à 750 N en direction de chaîne ou en direction de trame.

7. Tissu selon l'une des revendications 1 à 6, **caractérisé par** une force d'extraction du peigne supérieure à 800 N en direction de chaîne ou en direction de trame.

8. Tissu selon l'une des revendications 1 à 7, **caractérisé par** une force d'extraction du peigne supérieure à 850 N en direction de chaîne ou en direction de trame.

9. Tissu selon l'une des revendications 1 à 8, **caractérisé par** une force d'extraction du peigne supérieure à 900 N en direction de chaîne ou en direction de trame.

10. Tissu pour un coussin gonflable de sécurité, comportant des fils de chaîne et des fils de trame, notamment en multifilaments, **caractérisé par** un coefficient PF supérieur à 2700 et une force d'extraction du peigne supérieure à 700 N en direction de chaîne ou en direction de trame.

11. Tissu selon la revendication 10, **caractérisé par** une perméabilité (LD) d'après ISO 9237 inférieure à 3 l/dm$^2$/min.

12. Tissu selon les revendications 10 ou 11, **caractérisé par** un rapport d'embuvage entre le fil de chaîne et le fil de trame supérieur à 1.

13. Tissu selon l'une des revendications 10 à 12, **caractérisé par le fait que** le tissu est non-enrobé.

**14.** Tissu selon l'une des revendications 10 à 13, **caractérisé par** un coefficient PF supérieur à 2800.

**15.** Tissu selon l'une des revendications 10 à 14, **caractérisé par** un coefficient PF supérieur à 2900.

**16.** Tissu selon l'une des revendications 10 à 15, **caractérisé par** une force d'extraction du peigne supérieure à 750 N en direction de chaîne ou en direction de trame.

**17.** Tissu selon l'une des revendications 10 à 16, **caractérisé par** une force d'extraction du peigne supérieure à 800 N en direction de chaîne ou en direction de trame.

**18.** Tissu selon l'une des revendications 10 à 17, **caractérisé par** une force d'extraction du peigne supérieure à 850 N en direction de chaîne ou en direction de trame.

**19.** Tissu selon l'une des revendications 10 à 18, **caractérisé par** une force d'extraction du peigne supérieure à 900 N en direction de chaîne ou en direction de trame.

**20.** Tissu selon l'une des revendications précédentes, **caractérisé par le fait que** l'embuvage des fils de chaîne est plus grand que l'embuvage des fils de trame.

# EP 2 004 890 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1463655 A1
- DE 10049395 A
- WO 9605985 A

### In der Beschreibung aufgeführte Nicht-Patentliteratur

- Textilpraxis. Robert Kohlhammer-Verlag, 1947, 330-366